# EUROPÄISCHE PATENTANMELDUNG

(11) **EP 0 738 775 A2**
(43) Veröffentlichungstag der Anmeldung: **23.10.1996**
(21) Anmeldenummer: 96250088.0
(22) Anmeldetag: 17.04.1996
(51) Int. Cl.: C10M 105/40, C10M 129/76, B29C 33/60

(54) **Gleit- und Trennmittel für Kautschuk und Gummi**

(30) Priorität: 19.04.1995 DE 19515314
(71) Anmelder: Schill & Seilacher GmbH & Co., 22097 Hamburg (DE)
(72) Erfinder: Umland, Henning, Dr., 21423 Winsen/Luhe (DE)
(74) Vertreter: UEXKÜLL & STOLBERG

(57) **Zusammenfassung**

Es wird ein Gleit- und Trennmittel für Kautschuk und Gummi beschrieben, das einen Polyester aus einem Polyethylenglykol oder einem Gemisch von Polyethylenglykolen mit durchschnittlich 3 bis 20 Ethylenoxideinheiten pro Molekül und einer linearen Dicarbonsäure oder einem Gemisch linearer Dicarbonsäuren mit durchschnittlich 4 bis 10 Kohlenstoffatomen umfaßt. Ferner wird die Verwendung eines solchen Gleit- und Trennmittels zur Verminderung der Oberflächenreibung und -klebrigkeit bei Kautschuk und Gummi beschrieben.

## Beschreibung

Die Erfindung betrifft ein Gleit- und Trennmittel für Kautschuk und Gummi auf Basis wasserlöslicher Polyester.

Bei der Herstellung und Verarbeitung von Gummiartikeln kommt es häufig zu Problemen, die einerseits auf die Klebrigkeit des unvulkanisierten Kautschuks und andererseits auf den hohen Reibungskoeffizienten des vulkanisierten Kautschuks zurückzuführen sind. Als Beispiele sind das Verkleben von Kautschukteilen und -granulaten bei der Lagerung, das Kleben der Kautschukmischung an der Form bei der Vulkanisation sowie der hohe Kraftaufwand bei der Montage und Demontage von fertigen Gummiartikeln, wie z.B. Reifen, Dichtringe und Fensterprofile, zu nennen.

Aus oben genannten Gründen werden Kautschuk- und Gummioberflächen sowie die Oberflächen der mit diesen in Kontakt kommenden Metallteile häufig mit Gleit- und Trennmitteln behandelt, wobei im wesentlichen folgende Produktgruppen bzw. Zubereitungen aus diesen zum Einsatz kommen:
- Feststoffe (z.B. Glimmer, Talkum, Graphit, Zinkstearat)
- Tenside (z.B. Seifen, Sulfonate)
- Silikonöle, -harze und -tenside
- Cellulosederivate, Polyacrylate u.ä.
- Polyether

Aus der Gruppe der Polyether werden bisher im wesentlichen Polyethylenglykole und Ethylenoxid/Propylenoxid-Copolymere (EO/PO-Copolymere) sowie deren Alkyl- und Arylether verwendet (siehe US-A 4 555 549, US-A 4 689 082 und JP-A 60-088094).

Höhermolekulare Polyethylenglykole sind wirksame Trennmittel, können aber aufgrund ihrer hartwachsartigen Beschaffenheit bei normaler Umgebungstemperatur nur bedingt als Gleitmittel eingesetzt werden. Die niedermolekularen, bei Raumtemperatur flüssigen Typen hingegen bilden wegen ihrer relativ niedrigen Viskosität bei den gängigen Anwendungen keinen hinreichend tragfähigen Schmierfilm.

Unter den EO/PO-Copolymeren gibt es Typen, die solche Viskositäten, Stockpunkte und Temperatur-Viskositätsverläufe aufweisen, daß sie über einen weiten Temperaturbereich als Gleit- und Trennmittel geeignet sind, zumal sie die meisten Kautschuksorten nur wenig anquellen. Ihr Einsatz wird jedoch wegen ihres bekanntermaßen äußerst langsamen biologischen Abbaus in Kläranlagen, der durch ihre verzweigte Kettenstruktur bedingt ist, zunehmend durch gesetzliche Vorschriften eingeschränkt, da bei manchen Anwendungen das Trenn- bzw. Gleitmittel nach seinem Gebrauch mit Wasser abgewaschen und das Waschwasser dann der Klärung zugeführt wird.

Die Erfindung liegt die Aufgabe zugrunde, ein flüssiges, wasserlösliches Gleit- und Trennmittel vorzuschlagen, das in den anwendungstechnischen Eigenschaften weitgehend den bekannten EO/PO-Copolymeren entspricht und diese zu ersetzen vermag, darüber hinaus jedoch in Kläranlagen biologisch leicht abbaubar ist und daher nach dem Abspülen mit Wasser eine Sonderbehandlung des Abwassers überflüssig macht.

Diese Aufgabe wird erfindungsgemäß durch ein Gleit- und Trennmittel gelöst, das dadurch gekennzeichnet ist, daß es einen Polyester aus einem Polyethylenglykol oder einem Gemisch von Polyethylenglykolen mit durchschnittlich 3 bis 20 Ethylenoxideinheiten pro Molekül und einer linearen Dicarbonsäure oder einem Gemisch linearer Dicarbonsäuren mit durchschnittlich 4 bis 10 Kohlenstoffatomen pro Molekül umfaßt.

Bevorzugte Ausführungsformen sind Gegenstand der Unteransprüche.

Überraschenderweise hat es sich gezeigt, daß ein Polyester, der durch die Veresterung eines Polyethylenglykols oder eines Gemisches von Polyethylenglykolen mit durchschnittlich 3 bis 20, vorzugsweise 4 bis 12, insbesondere 8 Ethylenoxideinheiten pro Molekül und einer linearen Dicarbonsäure oder eines Gemisches linearer Dicarbonsäuren mit durchschnittlich 4 bis 10, vorzugsweise 5 bis 8, bevorzugter 6 Kohlenstoffatomen pro Molekül hergestellt wird, die oben geschilderten Anforderungen in hervorragender Weise erfüllt.

Insbesondere ein Gemisch eines solchen Polyesters mit bis zu 10 Massenteilen Polyethylenglykol gemäß obiger Definition auf ein Massenteil Polyester, d.h. Polyethylenglykol : Polyester ≤10 : 1, vorzugsweise ≤ 5 : 1, insbesondere ≤ 1 : 1, erfüllt diese Anforderungen ausgezeichnet.

Zur Optimierung der anwendungstechnischen Eigenschaften können noch bis zu 5 % herkömmliche Additive (z.B. Korrosionsschutzmittel, Stabilisatoren, Antioxidantien) beigemischt werden.

Die dynamische Viskosität der Gesamtformulierung läßt sich einerseits über die Molmasse des Polyesters und andererseits durch das Zumischen des Polyethylenglykols in weiten Grenzen variieren. Somit kann sie jeweils an die im Einzelfall vorliegenden Erfordernisse angepaßt werden. Sie liegt im allgemeinen bei einer Temperatur von 20 °C im Bereich von 500 bis 15 000 mPas, vorzugsweise 1000 bis 10 000 mPas (gemessen nach DIN 53019).

Im Gegensatz zu den ebenfalls biologisch leicht abbaubaren Polyethylenglykolen, die bei Raumtemperatur entweder zu dünnflüssig (Polyethylenglykol 400 hat eine dynamische Viskosität von ca. 110 bis 120 mPas bei 20 °C) oder bereits fest sind (Polyethylenglykol 600 hat einen Erstarrungspunkt von ca. 17 bis 22 °C), können die oben beschriebenen Polyester und Abmischungen so formuliert werden, daß man bei Raumtemperatur flüssige Produkte mit der für die jeweilige Anwendung erforderlichen Viskosität erhält.

### Beispiel 1

9 Mol Adipinsäure und 10 Mol handelsübliches Polyethylenglykol 400 wurden bei 235 °C unter Wasserabscheidung in einem mit einer dafür geeigneten Destillationsbrücke ausgestatteten Kolben miteinander verestert, bis sich kein Reaktionswasser mehr bildete. Anschließend wurde die Veresterung bei gleicher Temperatur im Wasserstrahlvakuum fortgesetzt, bis die Säurezahl des Reaktionsproduktes auf 3 mg KOH/g gesunken war. Der so erhaltene wasserlösliche Polyester hatte bei 20 °C eine dynamische Viskosität von 15 000 mPas (gemessen nach DIN 53019).

### Beispiel 2

50 g des gemäß Beispiel 1 hergestellten Polyesters wurden mit 49 g Polyethylenglykol 400, 0,8 g Triethanolamin (Korrosionsschutz) und 0,2 g polymerisiertem 1,2-Dihydro-2,2,4-trimethylchinolin (TMQ, Antioxidans) gemischt. Die bei 20 °C gemäß DIN 53019 gemessene dynamische Viskosität der Mischung betrug 2000 mPas. Der Pourpoint gemäß DIN ISO 3016 lag bei ca. 0 °C.

### Beispiel 3

60 g des gemäß obigem Beispiel 1 hergestellten Polyesters wurden mit 39 g Polyethylenglykol 400, 0.8 g Triethanolamin und 0,2 g TMQ gemischt. Die bei 20 °C gemäß DIN 53019 gemessene dynamische Viskosität der Mischung betrug 4000 mPas. Der Pourpoint gemäß DIN ISO 3016 lag bei ca. 0 °C.

Die Produkte der Beispiele 1 bis 3 wurden als Gleit- und Trennmittel bei der Vulkanisation von Gummiartikeln aus EPDM- und EAM-Kautschuk getestet und zeigten jeweils eine einwandfreie Wirkung. Insbesondere war auch nach vielen Heizzyklen bei 180 °C keine Neigung zur Bildung koks- oder harzartiger Rückstände an der Form infolge thermischer Zersetzung zu erkennen. Ein Anquellen des Kautschuks durch das Gleit- und Trennmittel war nicht zu beobachten. Alle drei Produkte konnten nach Gebrauch leicht mit Leitungswasser abgewaschen werden.

Exemplarisch wurde die biologische Abbaubarkeit der Mischung nach Beispiel 2 untersucht. Der Test wurde in Übereinstimmung mit der OECD-Richtlinie "OECD Guidelines for testing of chemicals; Ready Biodegradability: Closed bottle Test 301 D" vom 17. Juli 1992 durchgeführt.

Die gefundene biologische Abbaubarkeit unter den Bedingungen des Verfahrens betrug 71 % nach 28 Tagen, wobei Werte über 60 % als gut bewertet werden. Die innerhalb der Testreihe ebenfalls untersuchte Kontrollsubstanz Natriumacetat zeigte eine Abbaubarkeit von 77 %.

Die biologische Abbaubarkeit der bekannten EO/PO-Copolymere ist demgegenüber praktisch zu vernachlässigen.

## Patentansprüche

1. Gleit- und Trennmittel für Kautschuk und Gummi, **dadurch gekennzeichnet**, daß es einen Polyester aus einem Polyethylenglykol oder einem Gemisch von Polyethylenglykolen mit durchschnittlich 3 bis 20 Ethylenoxideinheiten pro Molekül und einer linearen Dicarbonsäure oder einem Gemisch linearer Dicarbonsäuren mit durchschnittlich 4 bis 10 Kohlenstoffatomen umfaßt.

2. Gleit- und Trennmittel nach Anspruch 1, **dadurch gekennzeichnet**, daß das Polyethylenglykol/die Polyethylenglykole 6 bis 12 und insbesondere 8 Ethylenoxideinheiten aufweist/aufweisen und die Dicarbonsäure/die Dicarbonsäuren 5 bis 8, insbesondere 6 Kohlenstoffatome aufweist/aufweisen.

3. Gleit- und Trennmittel für Kautschuk und Gummi nach Anspruch 1 oder 2, **dadurch gekennzeichnet**, daß es außerdem ein Polyethylenglykol oder ein Gemisch von Polyethylenglykolen mit durchschnittlich 3 bis 20, vorzugsweise 6 bis 12, insbesondere 8 Ethylenoxideinheiten in einem Verhältnis von Polyethylenglykol/Polyester von ≤ 10 : 1, insbesondere ≤ 5 : 1, bevorzugt ≤ 1: 1 als Mischungskomponente enthält.

4. Gleit- und Trennmittel nach einem der vorhergehenden Ansprüche, **dadurch gekennzeichnet**, daß die Polyethylenglykolkomponente des Polyesters und/oder das dem Polyester zugemischte Polyethylenglykol Polyethylenglykol 400 umfaßt.

5. Gleit- und Trennmittel nach einem der vorhergehenden Ansprüche, **dadurch gekennzeichnet**, daß die Dicarbonsäurekomponente des Polyesters Adipinsäure umfaßt.

6. Gleit- und Trennmittel nach einem der vorhergehenden Ansprüche, **dadurch gekennzeichne**t, daß es maximal 1 Gew.-% Antioxidans enthält.

7. Gleit- und Trennmittel nach Anspruch 6, **dadurch gekennzeichnet**, daß das Antioxidans polymerisiertes 1,2-Dihydro-2,2,4-trimethylchinolin umfaßt.

8. Gleit- und Trennmittel nach einem der vorhergehenden Ansprüche, **dadurch gekennzeichnet**, daß es maximal 4 Gew.-% Korrosionsschutzmittel enthält.

9. Gleit- und Trennmittel nach Anspruch 8, **dadurch gekennzeichnet**, daß das Korrosionsschutzmittel ein Alkanolamin umfaßt.

10. Gleit- und Trennmittel nach einem der vorhergehenden Ansprüche, **dadurch gekennzeichnet**, daß die dynamische Viskosität der Gesamtformulierung bei 20 °C, bestimmt nach DIN 53019, zwischen 500 und 15 000 mPas, vorzugsweise zwischen 1000 und 10 000 mPas liegt.

11. Verwendung eines Gleit- und Trennmittels gemäß einem der Ansprüche 1 bis 10 zur Verminderung der Oberflächenreibung und -klebrigkeit bei Kautschuk und Gummi.

12. Verwendung nach Anspruch 11, **dadurch gekennzeichnet**, daß das Gleit- und Trennmittel bei der Vulkanisation von Gummiartikeln eingesetzt wird.
